# FASCICULE DE BREVET EUROPEEN

(11) **EP 0 805 123 B1**
(45) Date de publication et mention de la délivrance du brevet: **16.07.2003**
(21) Numéro de dépôt: 96400933.6
(22) Date de dépôt: 02.05.1996
(51) Int. Cl.: C03B 5/235, C03B 5/04

(54) **Procédé et dispositif pour la fusion du verre**
Verfahren und Vorrichtung zum Schmelzen von Glas
Method and apparatus for melting glass

(43) Date de publication de la demande: 05.11.1997
(73) Titulaire: SAINT-GOBAIN GLASS FRANCE, 92400 Courbevoie (FR)
(72) Inventeur: M. Boillet, Jacques, 60200 Compiegne (FR)
(74) Mandataire: Muller, René

(56) Documents cités:
- EP-A- 0 306 657
- EP-A- 0 498 937
- EP-A- 0 567 131
- EP-A- 0 601 274
- WO-A-90/04571
- WO-A-94/06723

## Description

L'invention concerne un procédé et un dispositif pour la fusion du verre à partir de matières vitrifiables, dispositif plus communément appelé four de fusion, en vue d'alimenter, en continu, en verre fondu des installations de formage, soit de verre plat comme des installations de laminage ou float, soit de verre creux ou de gobeleterie comme une pluralité de machines de formage, soit de verre pour l'isolation (laine de verre, laine de roche), soit de verre pour les fibres de renforcement ou encore de verre spéciaux pour écrans de télévision ou autres.

L'invention s'intéresse à tous les types de fours de fusion, impliquant des capacités de production en verre fondu qui peuvent se chiffrer par exemple par des tirées de 10 tonnes/jour jusqu'à 1000 tonnes/jour et plus.

Ce type de four se compose usuellement, de manière connue, d'une succession de compartiments débouchant les uns dans les autres et ayant chacun des fonctions et dimensions spécifiques. Le four doit en effet être apte à fondre les matières vitrifiables et à garantir l'homogénéité chimique et thermique du verre une fois fondu.

On peut ranger les fours en deux grandes catégories suivant le moyen de chauffe adopté pour fondre les matières vitrifiables dans le compartiment de fusion :

Il existe d'une part les fours à fusion électrique, dits "à voûte froide", où la fusion est réalisée par des électrodes qui se trouvent immergées dans la profondeur du verre fondu, ce qui est par exemple connu du brevet EP-B-0 304 371.

Il existe d'autre part les fours à flammes, dits également fours à régénérateurs, notamment connus du brevet US-A-4,599,100. Dans ce cas, la puissance de chauffe est fournie par deux rangées de brûleurs fonctionnant en général avec un mélange fuel/air, et en alternance ; les gaz de combustion réchauffent alors alternativement l'un ou l'autre des deux régénérateurs placés en vis-à-vis de part et d'autre du compartiment de fusion et en communication avec celui- ci. Les gaz de combustion s'épuisent thermiquement au travers des empilages de réfractaires qui constituent ces régénérateurs, réfractaires restituant ensuite la chaleur ainsi emmagasinée au compartiment de fusion. Ce mode de chauffe est efficace et largement utilisé, bien qu'il ne soit pas dépourvu de certains inconvénients qui lui sont inhérents. Ainsi le coût énergétique des brûleurs fuel/air est relativement élevé. Par ailleurs, le système de fonctionnement des bruleurs qui sont "activés" en alternance avec des cycles de l'ordre de 15 à 60 minutes, n'est pas des plus simples à contrôler rigoureusement et peut provoquer une discontinuité dans une fabrication en continu et l'équilibre des températures s'en trouve affecté. Leur utilisation conduit en outre à introduire dans le compartiment de fusion une quantité significative d'air, donc d'azote, d'où un risque accru de voir se former une quantité certaine de gaz polluants type NOx qu'il faudra ensuite traiter.

De plus, la quantité importante de réfractaires spéciaux et coûteux nécessaires à la fabrication des régénérateurs renchérit de matière significative le coût de construction du four.

Le but de l'invention est donc de pallier les inconvénients liés à l'utilisation de fours à flammes, en proposant un nouveau type de chauffe par flammes qui réduit grandement le coût énergétique et le coût en matériaux de construction du four, qui simplifie son mode de fonctionnement, tout en garantissant l'obtention d'un verre fondu d'une qualité au moins aussi élevée.

L'invention a encore pour but de réduire l'usure des réfractaires constituant les parois du four et d'augmenter ainsi la durée du four.

Le WO-A-9406723 décrit un procédé et un four de fusion du verre selon lequel le combustible et le comburant y sont injectés séparément. Ce document n'enseigne rien quant à la répartition des proportions des fluides injectés ni quant à la hauteur relative des injections de combustible et comburant par rapport à la surface du verre. L'objectif dans ce document est d'obtenir une flamme « en nuage » au centre du four.

Le EP-A-0498937 décrit un four de fusion du verre à flamme avec des apports séparés d'oxygène à la flamme.

Le EP-A-0601274 enseigne un procédé de combustion utilisant deux oxydants différents ; le premier oxydant est de l'air qui est mélangé à un combustible pour former une flamme. Le second oxydant présente une concentration en oxygène plus élevée que le premier et il est introduit à proximité de la flamme.

Le WO-A-9004571 enseigne un ensemble de chauffe pour la fusion du verre comprenant un brûleur à l'air et une lance à oxygène située en dessous du niveau du brûleur.

Les documents de l'art antérieur n'enseigne pas la combinaison de brûleurs à oxygène et de lances à oxygène apportant au moins 50 % de l'oxygène de manière séparée.

L'invention concerne notamment un procédé pour la fusion de matière vitrifiable dans un compartiment de fusion, en vue d'alimenter en continu en verre fondu des installations de formage de verre, dans lequel la fusion des matières vitrifiables est assurée pour l'essentiel par la combustion d'un mélange de fuel et/ou de gaz avec de l'oxygène essentiellement pur, l'apport en fuel et/ou en gaz dans le compartiment de fusion s'effectuant en au moins un point d'arrivée avec un défaut d'oxygène par rapport aux quantités désirées correspondant sensiblement aux quantités stoechiométriques et à la combustion totale, au moins 50 % de l'oxygène correspondant à la combustion totale étant apporté de manière séparée en au moins un point d'arrivée différent distant d'au moins 5 cm, et de préférence d'au moins 10 cm, du point d'arrivée du fuel et/ou du gaz et situé à un niveau entre la surface supérieure du verre en fusion et le point d'arrivée du fuel et/ou du gaz, afin de réaliser une plus grande souplesse de réglage des températures dans ledit compartiment de fusion.

L'invention a également pour objet un four pour la fusion de matières vitrifiables destinées à la fabrication de verre, comportant un compartiment de fusion de verre (ou fusion/affinage), ledit compartiment étant muni, en partie amont, d'au moins une ouverture destinée à être alimentée en matières vitrifiables à l'aide d'un dispositif d'enfournement placé en regard, et en partie aval, d'une ouverture de sortie du verre fondu débouchant dans un compartiment aval destiné à conduire le verre fondu vers la zone de formage, la fusion des matières vitrifiables étant assurée dans le compartiment de fusion, pour l'essentiel, par au moins un brûleur à fuel et/ou à gaz fonctionnant en défaut d'oxygène, le comburant étant formé majoritairement d'oxygène essentiellement pur, au moins 50 % de l'oxygène nécessaire à la combustion désirée et produisant une flamme avec une température contrôlée étant apporté de manière séparée par au moins deux lances à oxygène, lesdites lances débouchant en des points distants d'au moins 5 cm et de préférence d'au moins 10 cm du au moins un brûleur, à un niveau au-dessous du brûleur et étant disposés autour dudit brûleur.

Par essentiellement pur, on entend selon l'invention de l'oxygène à ou moins 80 % et de préférence à au moins 90 %.

Dans le cadre de l'invention, les termes "amont" et "aval" sont en référence à la direction globale d'écoulement du verre fondu ou travers du four. Par compartiment de fusion, on entend aussi bien le compartiment de fusion que le compartiment de fusion/affinage.

Choisir, conformément à l'invention, un mode de chauffe combinant des brûleurs et des lances à oxygène apportant au moins 50 % de l'oxygène de manière séparée présente en effet toute une série d'avantages par rapport à des brûleurs plus conventionnels, fonctionnant notamment avec un comburant du type air, ou encore par rapport à des brûleurs à oxygène alimentés en oxygène en quantité stoechiométrique.

Ce mode de chauffe à l'oxygène autorise tout d'abord l'abandon du fonctionnement en "inversion" traditionnel des fours à flammes : les brûleurs à oxygène peuvent garder un régime de fonctionnement constant dans le temps, ce qui rend l'utilisation du four plus simple, ce fonctionnement en continu est plus régulier et autorise des réglages beaucoup plus fins qu'avec un fonctionnement en inversion. Surtout on peut supprimer complètement la présence des régénérateurs faits d'empilages de réfractaires coûteux et susceptibles d'usure. Les brûleurs à oxygène sont ainsi aptes à chauffer la voûte du compartiment de fusion et le volume dit "de laboratoire" entre ladite voûte et le niveau du verre fondu, en continu et sans avoir recours à des régénérateurs.

L'atmosphère qui règne au-dessus du niveau de verre dans le compartiment de fusion est beaucoup plus stable et contrôlée, ce qui peut s'avérer important pour la production de verres dits spéciaux.

Par ailleurs, le rendement thermique de ce type de brûleurs est notablement plus élevé que celui des brûleurs conventionnels fonctionnant avec un comburant du type air, du fait de l'absence d'azote qui diminue considérablement le volume de fumées générées. On obtient ainsi globalement des réductions de coût énergétique considérables, et ce type de brûleurs permet d'envisager également des augmentations sensibles de la tirée spécifique du four.

Le fait que les brûleurs choisis selon l'invention introduisent une quantité très faible, voire nulle, d'air dans le compartiment de fusion/affinage réduit très fortement les possibilités de formation de gaz polluants type NOx, rendant à tout le moins beaucoup moins coûteux le traitement des gaz de combustion évacués hors du compartiment.

En outre, toujours par rapport à des brûleurs conventionnels, les brûleurs à oxygène permettent d'introduire dans le compartiment de fusion un volume de gaz beaucoup moins important, et, de même, le volume de gaz résultant de la combustion est également fortement diminué comme déjà évoqué. Cela signifie que l'on peut envisager de diminuer le volume dit "de laboratoire" précédemment mentionné, notamment par exemple en abaissant un peu la voûte du compartiment de fusion, ce qui, là encore, tend à réduire à la fois le coût énergétique et le coût de construction du four lui-même.

Tout, donc, dans l'utilisation de brûleurs à oxygène fonctionnant sans inversion, concourt à l'obtention d'un four plus fiable, moins coûteux dans sa conception et qui permet des économies d'énergie pouvant aller jusqu'à largement au-dessus de 15 % par rapport à un four à flammes conventionnel de dimensions similaires.

Cependant, lorsque l'oxygène essentiellement pur est utilisé en tant que comburant dans des brûleurs à fuel et/ou à gaz avec des quantités dites stoechiométriques, la température de flamme obtenue au niveau de la sortie des brûleurs est plus élevée que la température de flamme utilisant de l'air en tant que comburant. Il peut alors se produire une détérioration rapide des réfractaires constituant les parois du four, notamment autour du nez des brûleurs.

Selon l'invention on a un procédé pour la fusion des matières vitrifiables dans un compartiment de fusion, en vue d'alimenter en continu en verre fondu des installations de formage du verre, dans lequel la fusion des matières vitrifiables est assurée pour l'essentiel par la combustion d'un mélange de fuel et/ou de gaz avec de l'oxygène essentiellement pur, l'apport en fuel et/ou en gaz dans le compartiment de fusion s'effectuant en au moins un point avec un défaut d'oxygène par rapport aux quantités stoechiométriques. au moins 50 % de l'oxygène correspondant à la combustion totale étant apporté de manière séparée en au moins un point d'arrivée différent.

Cet apport d'au moins 50 % de l'oxygène nécessaire à la combustion totale par au moins un point d'arrivée différent et de préférence par plusieurs points d'arrivée différents procure en outre une plus grande souplesse de réglage des températures dans le compartiment de fusion, la ou les zones du compartiment où est apporté l'oxygène correspondant généralement à des points dont on veut contrôler le niveau thermique.

En outre, l'alimentation des brûleurs en défaut d'oxygène conformément à l'invention, et l'apport d'oxygène, en combinaison, par des lances à oxygène réparties judicieusement permet notamment d'avoir une température de flamme contrôlée dite « flamme basse température, bas Noₓ ». De plus le fait d'intercaler de l'oxygène entre la flamme et les parois du four assure une atmosphère oxydante au niveau des parois. La flamme est aussi éloignée des parois et on diminue ainsi le phénomène d'exsudation et d'attaque des réfractaires dans sa phase vitreuse.

La combinaison des brûleurs à oxygène alimentés en défaut d'oxygène et des lances à oxygène procure une meilleure répartition de la flamme sur la composition et le bain de verre. Cette meilleure répartition de la flamme permet de baisser les températures de voûte et de remonter les températures de sole. Finalement cela permet d'envisager également des augmentations de la tirée spécifique des fours de 10 à 30 %.

Comme indiqué précédemment, l'apport en oxygène par les brûleurs d'une part et par les lances à oxygène d'autre part, se fait donc à raison de 0 à 50 % seulement par les brûleurs et le complément à 100 % de l'oxygène nécesssaire à la combustion par les lances à oxygène.

De préférence l'apport d'oxygène se fait à raison d'au moins 80 % de manière séparée par les lances à oxygène.

Finalement, tout l'oxygène ou essentiellement tout l'oxygène, peut être avantageusement apporté de manière séparée. On évite ainsi tout incident au niveau du nez de l'injecteur (brûleur) en cas d'encrassement ou de coulures en particulier dans le cas des verres spéciaux. Par tout ou essentiellement tout l'oxygène, on entend 100 à 95 % environ de l'oxygène.

Selon une des caractéristiques de l'invention, on alimente la flamme d'un brûleur par apports successifs de l'oxygène à la flamme et en des emplacements déterminés dans le four pour avoir la température de flamme désirée.

Cependant, le bilan très favorable évoqué ci-dessus serait compromis si, contrairement à l'invention, on n'évitait pas l'entrée d'air dans le compartiment de fusion provenant des compartiments avals. Dans le cas contraire, en effet, on s'expose au risque de recréer une certaine quantité de gaz polluants du type NOₓ dons le compartiment de fusion et on diminue sensiblement réconomie réalisée sur le plan énergétique au niveau de ce compartiment. On peut prévenir cette arrivée d'air à l'aide de moyens d'étanchéification vis-à-vis des gaz du compartiment de fusion/affinage par rapport au reste du four. Ce ou ces moyens d'étanchéification "isolent" ainsi l'atmosphère régnant au-dessus du verre fondu dans le compartiment de fusion de l'atmosphère du ou des compartiments aval successifs qui lui sont adjacents. Ces compartiments "aval" sont destinés à conditionner le verre, c'est-à-dire essentiellement destinés à le refroidir progressivement afin qu'il atteigne sa température de formage, à parfaire son homogénéité chimique et thermique et à en éliminer les corps étrangers du type infondus ou particules de matériau réfractaire. Or ce conditionnement thermique peut s'effectuer dans l'un ou l'autre de ces compartiments dits aval par, de manière connue, l'utilisation alternative ou combinée de moyens de réchauffage, par exemple des brûleurs conventionnels fuel-air, et de moyens de refroidissement introduisant de l'air en gronde quantité à température ambiante dans ces compartiments. Il est donc nécessaire d'empêcher ces types de gaz de "remonter" vers le compartiment de fusion/affinage afin qu'ils n'en perturbent pas son atmosphère très contrôlée.

Il va de soi que si le ou les compartiments aval sont conçus de manière, par exemple, à utiliser des moyens de refroidissement sans introduction d'air, et à présenter une atmosphère non composée d'air, ces moyens pour étanchéifier ne s'avèrent plus indispensables.

Selon une réalisation du dispositif selon l'invention, les brûleurs ou injecteurs sont répartis en lignes en étant alternés avec des lances à oxygène dans le pignon amont et/ou le pignon aval, et/ou les parois latérales parallèles au bain de verre avec un nombre et une inclinaison de +5 à -15 degrés, dépendant de la structure et des dimensions du four, et de la position par rapport au bain de verre. Les brûleurs et lances à oxygène débouchent dans le compartiment fusion/affinage au travers des parois de superstructure dont les sections peuvent être très réduites et n'altèrent pas l'isolation thermique de l'ensemble. Les brûleurs peuvent être indépendants ou associés en groupes de brûleurs dont la puissance de chauffe est régulée indépendamment d'un groupe à l'autre. Les groupes sont disposés essentiellement perpendiculairement à l'axe du four sur les parois latérales et essentiellement parallèlement au four sur les parois frontales amont ou aval, avec possibilité chaque fois d'orientation de 0 à 20 degrés par rapport à ces axes et au plan horizontal. Le chauffage peut être modulé et régulé d'une façon optimale dans tout le compartiment fusion/affinage et atteindre tous les profils de température souhaités, suivant les types de verre fondu et de fabrication. D'autres dispositions de brûleurs et lances à oxygène sont bien entendu possibles.

On peut prévoir, dans le compartiment de fusion/affinage des moyens mécaniques type bouillonneurs pour accélérer la convection ou des moyens de chauffe auxiliaires type électrodes immergés dans le verre afin d'ajuster ou de corriger le profil de température.

Le fait d'avoir supprimé le récupérateur ou les régénérateurs, réduit le nombre d'ouvertures, libère l'accès et la place autour du four, ce qui permet de mieux l'isoler et facilite son entretien.

Pour récupérer au maximum les thermies des fumées issues de la combustion des brûleurs dans le compartiment de fusion, on place de préférence les ouvertures d'évacuation à l'arrière des ouvertures d'alimentation en matières vitrifiables, les fumées suivant un trajet du centre du four vers les parois (faisant un écran entre la flamme et les parois) pour revenir de l'aval vers l'amont pour pénétrer au-dessus de la zone d'enfournement où surnagent les matières vitrifiables qui peuvent ainsi être avantageusement préchauffées.

Plusieurs positionnements peuvent être adoptés pour la ou les ouvertures d'alimentation en matières vitrifiables. Celles-ci peuvent être pratiquées d'une part dans l'une ou les deux parois latérales, d'autre part dans la paroi frontale du compartiment fusion.

Une solution avantageuse peut être deux ouvertures symétriques en regard l'une de l'autre dans les parois latérales.

Il est possible de prévoir des ouvertures d'évacuation de fumées auxiliaires soit dans la paroi frontale amont, soit dans les parois latérales du laboratoire de fusion/affinage.

Ces fumées une fois sorties du laboratoire du four sont encore relativement chaudes, on peut prévoir de les emmener dans des dispositifs de récupération de chaleur ou de pré-chauffage des matières vitrifiables avant leur enfournement. Elles peuvent encore servir au préchauffage de l'oxygène.

Un autre avantage de l'invention utilisant la combinaison de brûleurs (ou injecteurs) à gaz et/ou à fuel, alimentés en défaut d'oxygène, ce défaut pouvant être total, et de lances à oxygène, est un réglage plus souple de la flamme et notamment un réglage de sa position par rapport à la composition verrière, la flamme étant attirée vers l'emplacement de l'apport en oxygène.

Cet avantage, notamment, permet de concevoir des variantes de dispositif selon l'invention dans la disposition de brûleurs et de lances à oxygène.

Par apport séparé de l'oxygène, on entend généralement selon l'invention, un apport d'oxygène en un ou plusieurs points distant(s) d'au moins 5 cm et de préférence d'au moins 10 cm du point d'apport du fuel et/ou du gaz, c'est-à-dire du nez du brûleur. L'oxygène peut être avantageusement apporté en deux points disposés autour de chaque brûleur, et à un niveau inférieur au niveau de l'apport du fuel et/ou du gaz.

Ainsi l'invention envisage également un ensemble pouvant être utilisé dans le système de chauffe combinant brûleur et lances à oxygène selon l'invention. Cet ensemble comprend un bloc réfractaire muni d'un passage pour le logement d'un brûleur, ce passage étant évasé notamment en forme de tronc de cône vers la face destinée à être orientée vers l'intérieur du four, et de deux passages pouvant être disposés à égales distances et disposés à plus de 5 cm et de préférence à plus de 10 cm de l'axe de passage du brûleur, ces deux passages destinés au logement de deux lances à oxygène étant en outre situés à un niveau inférieur au niveau du brûleur quand l'ensemble est utilisé. L'ensemble peut être équipé d'un brûleur et de deux lances à oxygène.

Cette disposition des lances à oxygène par rapport au brûleur permet un très bon réglage de la flamme tout en évitant notamment un échauffement exagéré du réfractaire à l'emplacement du nez du brûleur.

D'autres caractéristiques et avantages de l'invention apparaissent dons la description suivante à l'aide des figures qui représentent :
Fig. 1 : une vue en coupe longitudinale d'un four selon l'invention,
Fig. 2 : une vue en plan de ce four.
Fig. 3 : un fonctionnement possible d'un four selon l'invention.
Fig. 4 et 5 : un ensemble comprenant un bloc réfractaire et une combinaison brûleur/lances à oxygène selon l'invention.

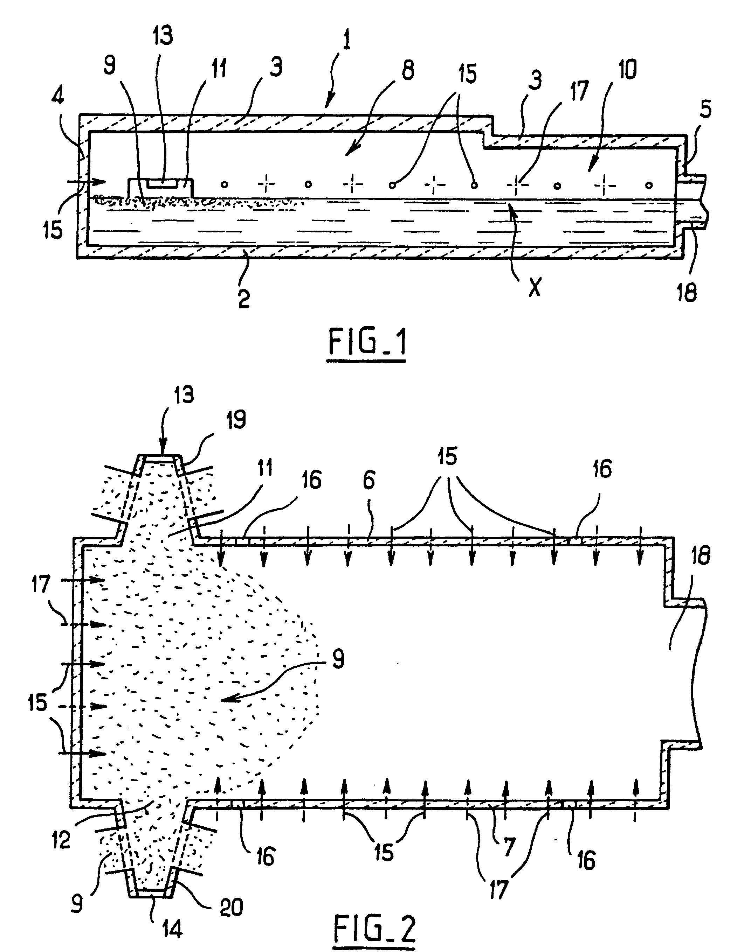

Les figures 1 et 2 représentent schématiquement le compartiment 1 de fusion/affinage du four de fusion selon l'invention. Ce compartiment est délimité par une sole 2, une voûte 3, des parois amont 4, aval 5 et latérales 6 - 7. Le niveau de verre fondu est indiqué sur la figure 1 par la ligne horizontale X. Le verre s'écoule vers le compartiment aval par le passage rétréci 18.

Ce four comporte 2 zones principales :
- la zone 8 de fusion où sont enfournées les matières vitrifiables 9 surnageant sur le verre en fusion,
- la zone 10 de fusion/affinage, cette zone est délimitée par une voûte 3 plus basse, ce qui permet notamment un gain de réfractaire.

Dans la zone 8 est prévu dans cet exemple de réalisation un mode d'enfournement latéral du mélange vitrifiable. Bien entendu, d'autres réalisations selon l'invention peuvent utiliser un mode d'enfoumement frontal.

L'ouverture d'alimentation représentée sur les figures 1 et 2 est constituée de deux ouvertures 11 et 12 symétriques qui lient le compartiment de fusion à deux appendices 19, 20, dans lesquels s'effectue le chargement en matière vitrifiable, des deux côtés dans cet exemple.

Des ouvertures 13, 14 pour l'évacuation des fumées de combustion sont prévues en arrière des ouvertures d'alimentation 11, 12. Les fumées sont ainsi obligées de suivre un trajet d'évacuation à partir du centre du four en longeant les parois et la voûte et en surplombant les matières vitrifiables non encore fondues, ce qui améliore le rendement énergétique du four.

Les fumées peuvent ensuite être utilisées pour alimenter tout dispositif de récupération de chaleur, ou dans un système de préchauffage des matières vitritiables. Il peut être aussi prévu des ouvertures auxiliaires 16 d'évacuation des fumées dons les parois frontale et latérales.

Dans toutes les parois : frontales, latérales, aval, sont percées de petites ouvertures pour introduire des injecteurs 15 ou brûleurs représentés sur les figures par une flèche en trait plein, des lances à oxygène 17 représentées par une flèche en traits pointillés. Les brûleurs et les lances à oxygène sont disposés au-dessus du niveau de verre de façon à former des groupes, ou individuellement pour marquer un point chaud, et arriver à une répartition optimale de l'échange thermique entre les flammes et le bain de verre; chaque groupe de brûleurs ou brûleur indépendant peut être régulé en puissance de chauffe de manière indépendante, ce qui permet d'obtenir le profil de température désiré en tout point et à tout moment. Par ailleurs les lances à oxygène sont disposées en divers endroits sur les parois afin d'accompagner la flamme et de faire en sorte que sur le parcours des flammes il n'y ait pas de suroxygénation donnant une flamme trop chaude, ou au contraire un manque d'oxygène qui donne une flamme réductrice. Dans les deux cas en effet, il peut se produire une usure prématurée des réfractaires du four.

L'utilisation de brûleurs et lances à oxygène fonctionnant en continu assure un rendement thermique nettement plus élevé que celui des brûleurs conventionnels en utilisant un volume de comburant réduit par rapport à l'air, ce qui donne un volume de fumées réduit de 80 % environ. La conception du laboratoire de fusion/affinage peut être réduite en volume, sans contre indication pour le fonctionnement du four, d'où une économie en matériaux de construction du four. De même, les brûleurs et lances à oxygène n'introduisent pas d'air, donc pas d'azote dans le four, ce qui évite le formation de gaz polluant type NOₓ. L'alimentation en oxygène des brûleurs de manière séparée évite une détérioration des réfractaires notamment au niveau du nez des brûleurs.

Pour garantir les avantages du tout oxygène il est nécessaire d'éliminer toute introduction d'air dans le compartiment de fusion affinage. Il est nécessaire que toutes les ouvertures entre le laboratoire et l'extérieur soient fermées (joint de dilatation, regards, etc...)

De plus, la ou les sorties du verre du compartiment fusion/affinage vers les compartiments de formage sont faites de telle façon qu'il n'y ait pas de courroies de recirculation du verre fondu entre les zones fusion/affinage et les zones d'alimentation des compartiments de travail, ni d'échange d'atmosphère. Pour ce faire, on utilise des moyens d'alimentation connus : alimentation par gorge et canal, alimentation par canal avec barrage suspendu ou immergé, alimentation par canal avec écran suspendu et barrage.

Le système de chauffage selon l'invention, rend l'exploitation du four plus fiable avec un coût de fabrication moins onéreux. Il procure une constance de l'atmosphère du compartiment de fusion ce qui, avec des réfractaires adéquats, permet d'augmenter la durée de vie du four. En effet les variations thermiques sont une des causes de l'usure des réfractaires. Par ailleurs, la pollution atmosphérique est fortement diminuée.

Ainsi, par exemple, le système de chauffage selon l'invention permet de baisser la température de voûte du four de 50 à 80°C environ et d'augmenter sa température de sole de 10 à 20°C environ par rapport à des systèmes connus pour une température de fusion donnée.

En outre, la température au niveau du nez d'un brûleur à oxygène est diminuée d'environ 60°C grâce à l'alimentation séparée de l'oxygène.

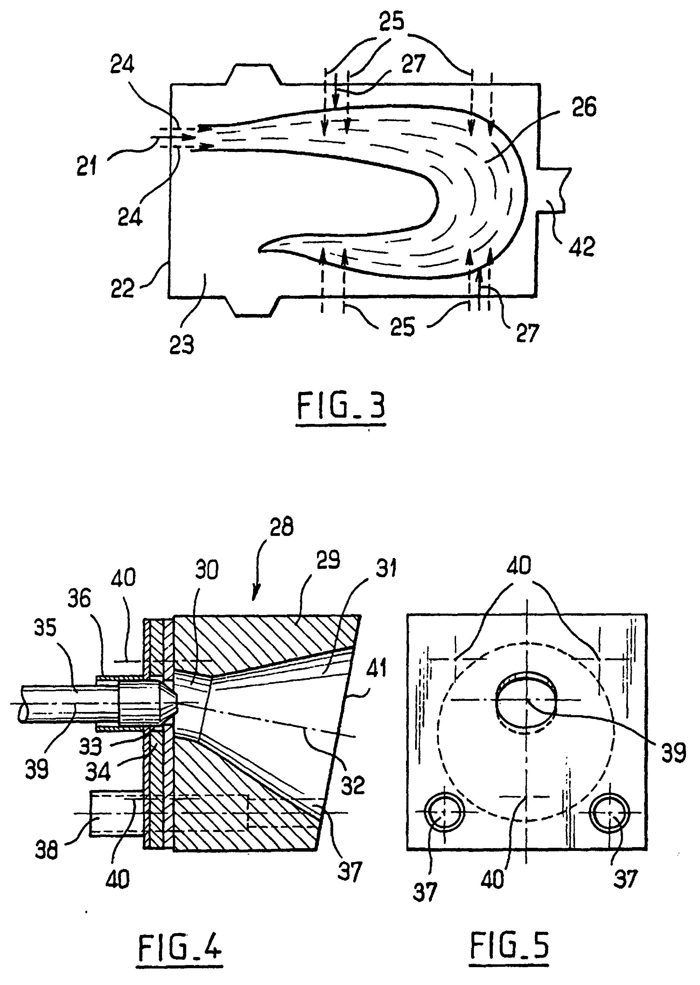

La figure 3 représente schématiquement le fonctionnement d'un système de chauffe selon l'invention pour un four à boucle.

Un brûleur 21 alimenté en fuel et/ou gaz, mais essentiellement sans oxygène, est disposé dans le pignon amont 22 du four 23. Une partie de l'oxygène nécessaire à la combustion est apportée par deux lances à oxygène 24 disposées autour du brûleur 21 dans le pignon amont. La quantité d'oxygène apportée par ces deux lances correspond à environ 20 à 40 % de l'oxygène nécessaire à la combustion.

D'autres lances à oxygènes 25 sont disposées dans les parois du four. Quatre paires de lances 25 sont représentées ici. Chacune de ces paires apporte environ 15 à 20 % de l'oxygène nécessaire. On apporte ainsi l'oxygène en accompagnant la flamme 26 au long de son parcours de manière à avoir une flamme ni trop chaude, ni trop froide.

Lorsqu'on désire augmenter la tirée du four on peut placer d'autres brûleurs 27 entre les paires de lances à oxygène 25 et augmenter également l'apport en oxygène par ces lances et/ou d'autres lances supplémentaires. Le verre fondu est évacué par la sortie 42 vers le compartiment aval.

Les figures 4 et 5 représentent un ensemble 28 avantageusement utilisé pour la chauffe selon l'invention combinant un brûleur et des lances à oxygène. Cet ensemble comprend un bloc réfractaire 29 pourvu d'un passage central 30 se terminant en s'élargissant en forme de tronc de cone 31 dont l'axe 32 est incliné d'environ 15 degré vers le bas par rapport à l'horizontale.

Ce passage 30 évasé vers la face 41 destinée à être orientée vers l'intérieur du four prolonge l'ouverture 33 prévue dans une plaque composite 34 pour le montage du brûleur 35 (non représenté sur la figure 5) à l'aide d'un manchon cylindrique 36.

Deux autres passages 37 disposés symétriquement, sous l'axe du brûleur, et hors du tronc de cône 31, sont prévus pour le montage à l'aide de manchons cylindriques 38 de deux lances à oxygène (non représentées). Les axes de ces deux passages 37 sont situés à une distance supérieure à 10 cm de l'axe 39 du nez du brûleur 35. Des moyens de fixation 40 sont prévus pour la fixation de la plaque composite 34 sur le bloc réfractaire 29.

Cet ensemble de chauffe permet notamment un très bon réglage de la température de la flamme, ni trop chaude, ni trop froide. Il évite en particulier l'encrassement du nez de brûleur, et aussi une détérioration rapide du réfractaire à proximité du nez du brûleur.

## Revendications

1. Procédé pour la fusion de matière vitrifiable dans un compartiment (1) de fusion, en vue d'alimenter en continu en verre fondu des installations de formage, dans lequel la fusion des matières vitrifiables est assurée pour l'essentiel par la combustion d'un mélange de fuel et/ou de gaz avec de l'oxygène essentiellement pur, **caractérisé en ce que** l'apport en fuel et/ou en gaz dans le compartiment de fusion s'effectue en au moins un point d'arrivée avec un défaut d'oxygène par rapport aux quantités désirées correspondant sensiblement aux quantités stoechiométriques et à la combustion totale, au moins 50 % de l'oxygène correspondant à la combustion totale étant apporté de manière séparée en au moins un point d'arrivée différent distant d'au moins 5 cm, et de préférence d'au moins 10 cm du point d'arrivée du fuel et/ou du gaz et situé à un niveau entre la surface supérieure du verre en fusion et le point d'arrivée du fuel et/ou du gaz, afin de réaliser une plus grande souplesse de réglage des températures dans ledit compartiment de fusion.

2. Procédé selon la revendication 1, **caractérisé en ce qu'**au moins 80 % de l'oxygène est apporté de manière séparée.

3. Procédé selon l'une des revendications précédentes, **caractérisé en ce que** tout ou essentiellement tout l'oxygène est apporté de manière séparée, de préférence en plusieurs points d'arrivée.

4. Procédé selon l'une des revendications précédentes, **caractérisé en ce qu'**on règle les températures et la position des zones dont on veut contrôler le niveau thermique dans le compartiment de fusion par un apport de manière séparée d'une part de l'essentiel de l'oxygène nécessaire à la combustion et d'autre part du fuel et/ou du gaz.

5. Procédé selon une des revendications précédentes, **caractérisé en ce qu'**on alimente la flamme du brûleur par apports successifs et en différents points de l'oxygène nécessaire à la combustion.

6. Procédé selon l'une des revendications précédentes, **caractérisé en ce que** l'oxygène est apporté en deux points disposés autour du point d'arrivée du fuel et/ou gaz, les deux points d'arrivée de l'oxygène étant à un niveau inférieur au niveau de l'apport du fuel et/ou gaz.

7. Procédé selon l'une des revendications précédentes **caractérisé en ce que** les installations de formage sont pour le verre plat.

8. Ensemble de chauffe équipé ou non d'un brûleur et de lances à oxygène, apte à être utilisé pour la mise en oeuvre du procédé selon l'une des revendications précédentes, **caractérisé en ce qu'**il comprend un bloc réfractaire (28) muni d'un passage (30)correspondant au logement d'un brûleur, ce passage étant évasé vers la face (41) destinée à être orientée vers l'intérieur du four, et de deux passages (37) disposés à plus de 5 cm, et de préférence à plus de 10 cm de l'axe de passage du brûleur, pour le logement de lances à oxygène disposés hors du passage 30 évasé pour le brûleur et à un niveau inférieur à l'axe de ce passage quand l'ensemble est utilisé.

9. Four pour la fusion de matières vitrifiables destinées à la fabrication de verre, comportant un compartiment (1) de fusion de verre, ledit compartiment étant muni, en partie amont, d'au moins une ouverture (11, 12) destinée à être alimentée en matières vitrifiables (9) à l'aide d'un dispositif d'enfournement placé en regard, et en partie aval, d'une ouverture (18) de sortie du verre fondu débouchant dans un compartiment aval destiné à conduire le verre fondu vers la zone de formage, **caractérisé en ce que** la fusion des matières vitrifiables est assurée dans le compartiment (1) de fusion, pour l'essentiel, par au moins un brûleur (15) à fuel et/ou à gaz fonctionnant en défaut d'oxygène, le comburant étant formé majoritairement d'oxygène essentiellement pur, au moins 50 % de l'oxygène nécessaire à la combustion désirée et produisant une flamme avec une température contrôlée étant apporté de manière séparée par au moins deux lances à oxygène (17), lesdites lances débouchant en des points distants d'au moins 5 cm et de préférence d'au moins 10 cm du au moins un brûleur, à un niveau au-dessous du brûleur et étant disposés autour dudit brûleur.

10. Four selon la revendication précédente, **caractérisé en ce que** tout ou essentiellement tout l'oxygène est apporté de manière séparée par les lances à oxygène disposées sur le trajet de la flamme.

11. Four selon l'une des revendications de four précédentes, **caractérisé en ce qu'**il est équipé d'au moins un moyen pour étanchéifier vis-à-vis des gaz entre le compartiment (1) de fusion et le compartiment aval.

12. Four selon l'une des revendications de four précédentes, **caractérisé en ce qu'**au moins une partie des brûleurs est répartie en vis-à-vis en deux rangées, en débouchant dans le compartiment (1) de fusion au travers des parois latérales (4, 5) de celui-ci, en étant alternés avec les lances à oxygène.

13. Four selon l'une des revendications de four précédentes, **caractérisé en ce que** les brûleurs (16) sont répartis en une pluralité de groupes dont la puissance de chauffe est régulée de manière autonome d'un groupe à l'autre.

14. Four selon l'une des revendications de four précédentes, **caractérisé en ce que** des moyens auxiliaires de chauffe sont prévus dans le compartiment de fusion (1), notamment sous forme d'électrodes immergées dans la profondeur de verre fondu.

15. Four selon l'une des revendications de four précédentes, **caractérisé en ce qu'**il est destiné à la fabrication de verre plat.

## Patentansprüche

1. Verfahren zum Schmelzen von Glasrohstoffen in einem Schmelzabteil (1) für die kontinuierliche Versorgung von Formgebungsanlagen mit Glasschmelze, in welchem das Schmelzen der Glasrohstoffe im Wesentlichen durch Verbrennung eines Gemischs aus Brennstoff und/oder Gas und im Wesentlichen reinem Sauerstoff sichergestellt wird, **dadurch gekennzeichnet, dass** die Einleitung von Brennstoff und/oder Gas in das Schmelzabteil an wenigstens einer Zuleitungsstelle mit einem Sauerstoffdefizit in Bezug auf die gewünschten Mengen, die im Wesentlichen den stöchiometrischen Mengen und der vollständigen Verbrennung entsprechen, erfolgt, wobei mindestens 50 % des Sauerstoffs, die der vollständigen Verbrennung entsprechen, separat an wenigstens einer anderen Zuleitungsstelle eingeleitet werden, die mindestens 5 cm und vorzugsweise mindestens 10 cm von der Zuleitungsstelle des Brennstoffs und/oder Gases entfernt ist und sich in einer Höhe zwischen der Oberfläche der Glasschmelze und der Zuleitungsstelle des Brennstoffs und/oder Gases befindet, um die Temperaturregelung in diesem Schmelzabteil flexibler zu machen.

2. Verfahren nach Anspruch 1, **dadurch gekennzeichnet, dass** mindestens 80 % des Sauerstoffs separat zugeleitet werden.

3. Verfahren nach einem der vorhergehenden Ansprüche, **dadurch gekennzeichnet, dass** der gesamte oder im Wesentlichen gesamte Sauerstoff, vorzugsweise an mehreren Zuleitungsstellen, separat eingeleitet wird.

4. Verfahren nach einem der vorhergehenden Ansprüche, **dadurch gekennzeichnet, dass** Temperatur und Lage der Bereiche, deren Wärmeregime im Schmelzabteil kontrolliert werden soll, durch separate Zuleitung von einerseits dem grösseren Teil des für die Verbrennung erforderlichen Sauerstoffs und andererseits Brennstoff und/oder Gas geregelt werden.

5. Verfahren nach einem der vorhergehenden Ansprüche, **dadurch gekennzeichnet, dass** die Brennerflamme mit dem für die Verbrennung erforderlichen Sauerstoff versorgt wird, indem er sukzessive und an verschiedenen Stellen zugeleitet wird.

6. Verfahren nach einem der vorhergehenden Ansprüche, **dadurch gekennzeichnet, dass** der Sauerstoff an zwei Stellen zugeleitet wird, die um die Stelle für die Zuleitung des Brennstoffs und/oder Gases herum angeordnet sind, wobei sich die zwei Sauerstoffzuleitungsstellen in einer Höhe unterhalb der der Zuleitung des Brennstoffs und/oder Gases befinden.

7. Verfahren nach einem der vorhergehenden Ansprüche, **dadurch gekennzeichnet, dass** die Formgebungsanlagen für Flachglas vorgesehen sind.

8. Heizvorrichtung, die gegebenenfalls mit einem Brenner und Sauerstofflanzen ausgestattet ist und für die Durchführung des Verfahrens nach einem der vorhergehenden Ansprüche verwendet werden kann, **dadurch gekennzeichnet, dass** sie einen feuerfesten Brennerstein (28) umfasst, der mit einem der Aufnahme für einen Brenner entsprechenden Durchgang (30), der sich zu der Seite (41) erweitert, die vorgesehen ist, zum Ofeninneren zu zeigen, und an Stellen, die mindestens 5 cm und vorzugsweise mindestens 10 cm von wenigstens einem Brenner entfernt sind, mit zwei Durchgängen (37) für die Aufnahme von Sauerstofflanzen versehen ist, die außerhalb des sich erweiternden Durchgangs (30) für den Brenner in einer Höhe unterhalb der Achse dieses Durchgangs angeordnet sind, wenn die Vorrichtung verwendet wird.

9. Ofen zum Schmelzen von für die Glasherstellung vorgesehenen Glasrohstoffen, der ein Abteil (1) für das Erschmelzen von Glas umfasst, das im hinteren Teil mit mindestens einer Öffnung (11, 12), die vorgesehen ist, mittels einer an ihr angeordneten Beschickungseinrichtung mit Glasrohstoffen (9) versorgt zu werden, und im vorderen Teil mit einer Austrittsöffnung (18) für die Glasschmelze versehen ist, die in ein vorderes Abteil mündet, das vorgesehen ist, die Glasschmelze in den Formgebungsbereich zu leiten, **dadurch gekennzeichnet, dass** das Schmelzen der Glasrohstoffe im Schmelzabteil (1) im Wesentlichen von wenigstens einem Brenner (15) für Brennstoff und/oder Gas, der mit einem Sauerstoffdefizit arbeitet, sichergestellt wird und das Verbrennungsmittel überwiegend von im Wesentlichen reinem Sauerstoff, der mindestens 50 % des für die gewünschte Verbrennung erforderlichen Sauerstoffs ausmacht, gebildet wird, eine Flamme mit kontrollierter Temperatur erzeugt und separat von mindestens zwei Sauerstofflanzen (17) bereitgestellt wird, die an Stellen, die mindestens 5 cm und vorzugsweise mindestens 10 cm von wenigstens einem Brenner entfernt sind, in einer Höhe unterhalb des Brenners um diesen herum angeordnet münden.

10. Ofen nach dem vorhergehenden Anspruch, **dadurch gekennzeichnet, dass** der gesamte oder im Wesentlichen gesamte Sauerstoff separat von am Verlauf der Flamme angeordneten Sauerstofflanzen zugeleitet wird.

11. Ofen nach einem der vorhergehenden ihn betreffenden Ansprüche, **dadurch gekennzeichnet, dass** er mit mindestens einem Mittel ausgestattet ist, das zwischen Schmelzabteil (1) und vorderem Abteil für Gasdichtheit sorgt.

12. Ofen nach einem der vorhergehenden ihn betreffenden Ansprüche, **dadurch gekennzeichnet, dass** wenigstens ein Teil der Brenner in zwei Reihen einander gegenüberliegend angeordnet ist, wobei sie in das Schmelzabteil (1) durch dessen Seitenwände (4, 5) führen und sich mit den Sauerstofflanzen abwechseln.

13. Ofen nach einem der vorhergehenden ihn betreffenden Ansprüche, **dadurch gekennzeichnet, dass** die Brenner (16) in einer Vielzahl von Gruppen angeordnet sind, deren Heizleistung von einer Gruppe zur nächsten autonom geregelt wird.

14. Ofen nach einem der vorhergehenden ihn betreffenden Ansprüche, **dadurch gekennzeichnet, dass** im Schmelzabteil (1) zusätzliche Beheizungsmittel vorgesehen sind, insbesondere in Form von Elektroden, die in die Glasschmelze eintauchen.

15. Ofen nach einem der vorhergehenden ihn betreffenden Ansprüche, **dadurch gekennzeichnet, dass** er für die Herstellung von Flachglas vorgesehen ist.

## Claims

1. Method for melting vitrifiable material in a melting compartment (1) with a view to continuously supplying forming installations with molten glass, in which the melting of the vitrifiable materials is mainly provided by the combustion of a mixture of fuel and/or gas with essentially pure oxygen, **characterised in that** the supply of fuel and/or gas to the melting compartment takes place at at least one feed point with an oxygen deficiency compared with the required quantities corresponding substantially to the stoichiometric quantities and to total combustion, at least 50% of the oxygen corresponding to total combustion being supplied separately at at least one different feed point distant by at least 5 cm and preferably at least 10 cm from the fuel and/or gas feed point and situated at a level between the upper surface of the molten glass and the fuel and/or gas feed point, in order to achieve greater flexibility in adjusting the temperatures in the said melting compartment.

2. Method according to Claim 1, **characterised in that** at least 80% of the oxygen is supplied separately.

3. Method according to one of the preceding claims, **characterised in that** all or essentially all the oxygen is supplied separately, preferably at several feed points.

4. Method according to one of the preceding claims, **characterised in that** the temperatures and the position of the areas whose heat level in the melting compartment it is wished to control are adjusted by a separate supply of on the one hand most of the oxygen necessary for combustion and on the other hand fuel and/or gas.

5. Method according to one of the preceding claims, **characterised in that** the burner flame is fed by successive supplies at different points of the oxygen necessary for combustion.

6. Method according to one of the preceding claims, **characterised in that** the oxygen is supplied at two points disposed around the fuel and/or gas feed point, the two oxygen feed points being at a lower level than the fuel and/or gas supply level.

7. Method according to one of the preceding claims, **characterised in that** the forming installations are for flat glass.

8. Heating unit, equipped or not with a burner and oxygen lances, able to be used for implementing the method according to one of the preceding claims, **characterised in that** it comprises a refractory block (28) provided with a passage (30) corresponding to the housing of a burner, this passage being splayed towards the face (41) intended to be oriented towards the inside of the furnace, and two passages (37) disposed at more than 5 cm and preferably more than 10 cm from the burner passage axis, for housing oxygen lances disposed outside the splayed passage (30) for the burner and at a lower level than the axis of this passage when the unit is used.

9. Burners for melting vitrifiable materials intended for manufacturing glass, comprising a glass melting compartment (1), the said compartment being provided, in the upstream part, with at least one opening (11, 12) intended to be supplied with vitrifiable materials (9) by means of a charging device placed opposite, and at the downstream part of, an outlet opening (18) for the molten glass opening out in a downstream compartment intended to conduct the molten glass to the forming area, **characterised in that** the melting of the vitrifiable materials is carried out in a melting compartment (1), essentially by at least one fuel and/or gas burner (15) functioning under oxygen deficiency, the oxygen being formed mainly from essentially pure oxygen, at least 50% of the oxygen necessary for the required production and producing a flame with a controlled temperature being supplied separately by at least two oxygen lances (17), the said lances opening out at points distant by at least 5 cm and preferably at least 10 cm from at least one burner, at a level below the burner and around the said burner.

10. Furnace according to the preceding claim, **characterised in that** all or essentially all the oxygen is supplied separately by oxygen lances disposed on the path of the flame.

11. Furnace according to one of the preceding furnace claims, **characterised in that** it is equipped with at least one means for sealing vis-à-vis gases between the melting compartment (1) and the downstream compartment.

12. Furnace according to one of the preceding furnace claims, **characterised in that** at least some of the burners are distributed facing each other in two rows, opening out in the melting compartment (1) through lateral walls (4, 5) thereof, whilst alternating with the oxygen lances.

13. Furnace according to one of the preceding furnace claims, **characterised in that** the burners (16) are distributed in a plurality of groups whose heating power is regulated autonomously from one group to another.

14. Furnace according to one of the preceding furnace claims, **characterised in that** auxiliary heating means are provided in the melting compartment (1) in particular in the form of electrodes immersed in the depth of molten glass.

15. Furnace according to one of the preceding furnace claims, **characterised in that** it is intended for the manufacture of flat glass.
